# EUROPEAN PATENT APPLICATION

(11) **EP 4 793 301 A1**
(43) Date of publication of application: **19.08.2026**
(21) Application number: 25158421.5
(22) Date of filing: 17.02.2025
(51) Int. Cl.: C08G 18/10, C08G 18/30, C08G 18/48, C08G 18/76, C09J 175/04

(54) **ONE-COMPONENT MOISTURE-CURABLE POLYURETHANE HOT-MELT ADHESIVE WITH IMPROVED STABILITY AGAINST PLASTICIZER MIGRATION**

(71) Applicant: Sika Technology AG, 6340 Baar (CH)
(72) Inventor: TEPELMANN, Weng, 22525 Hamburg (DE)
(74) Representative: Sika Patent Attorneys

(57) **Abstract**

The invention relates to the use of a one-component moisture-curable polyurethane hot-melt adhesive to adhesively bond plasticizer-containing substrates, comprising at least one moisture-curable polyurethane polymer P obtainable by the reaction of at least one isocyanate-functional species A and at least one polyester polyol B.

The moisture-curable polyurethane hot-melt adhesive exhibits improved stability against plasticizer migration is particularly suitable for use in interior automotive assembly, as a laminating adhesive or for the building of sandwich elements.

## Description

### Technical Field

The invention relates to the use of a one-component moisture-curable polyurethane hot-melt adhesives to bond plasticizer-containing substrates.

### Prior Art

Hot-melt adhesives are solvent free adhesives, which are solid at room temperature, and which are applied to the substrate to be bonded in form of a melt. After cooling the adhesive solidifies and forms an adhesive bond with the substrate through physically occurring bonding. Conventional hot-melt adhesives are non-reactive adhesives. Reactive hot-melt adhesives contain polymers with reactive groups that enable chemical curing of the adhesive, for example, by crosslinking of the polymer chains. The chemical curing of the polymers can be initiated, for example, by heating or exposing the adhesive composition to water, such as atmospheric moisture. Moisture curing hot-melt adhesives typically contain polymers functionalized with isocyanate or silane groups, which enables crosslinking of the polymer chains upon contact with atmospheric moisture.

Moisture curing polyurethane hot-melt adhesives (PUR-HMA) consist mainly of isocyanate-functional polyurethane polymers, which have been obtained by reacting suitable polyols, typically polyester and/or polyether polyols, with polyisocyanates, where the reaction is conducted at a molar excess of isocyanate (NCO) groups over hydroxyl (OH) groups. The adhesive composition is cured by reaction of the residual isocyanate groups with water, which results in various chain extension and/or crosslinking reactions of the polymers. A fully cured polyurethane hot-melt adhesive comprises urea and/or urethane bonds and, depending on the starting materials used for providing the isocyanate-functional polymer, ester and/or ether bonds.

Moisture curing polyurethane hot-melt adhesives are widely used in white goods and automotive industry for sealing and bonding. Such hot-melt adhesives are gaining popularity by original equipment manufacturers (OEM) in car manufacturing because they are easy to apply, versatile and provide high strength bonding. A particularly interesting application lies in interior automotive applications such as bonding of interior fittings, in particular doors, center console, rear shelf but also in upholstery and interior trim.

Substrates can contain plasticizers, especially if a softer and more flexible material is desired. For example, artificial leather, also called synthetic leather, is particularly important as a substrate in automotive interior, because the material has a leather-like finish, but the actual material is much less expensive. One of its primary advantages is that it requires little maintenance in comparison to leather and does not crack or fade easily. Artificial leather is commonly made from polymers such as polyvinyl chloride (PVC) in foils, containing significant amounts of plasticizers to allow for sufficient flexibility of the material.

However, adhesives contacting substrates containing plasticizer might lead to a phenomenon called plasticizer migration, wherein the plasticizer from the substrate will move into the adhesive, eventually deteriorating the performance of the adhesive. Issues caused by plasticizer migration include a loss of adhesive strength, staining, discoloration, surface damage, decreased durability and various other changes in material properties. Typical moisture curing polyurethane hot-melt adhesives exhibit a poor stability against plasticizer migration from the substrate.

There is thus a need for a moisture curable polyurethane hot-melt adhesive having improved stability against plasticizer migration, especially when adhesively bonded to plasticizer-containing substrates. Such adhesives are especially suitable for use in interior automotive assembly, as a laminating adhesive or for the building of sandwich elements.

### Summary of the Invention

Thus, an object of the present invention to provide a one-component reactive polyurethane hotmelt composition which is suitable for bonding plasticizer-containing substrates and is less effected by plasticizer migration.

Surprisingly, this object could be achieved by the features of independent claim 1.

Further aspects of the invention are the subject of further independent claims. Particularly preferred embodiments of the invention are the subject of the dependent claims.

### Ways of executing the invention

The subject of the present invention is the use of a curable hot-melt adhesive composition to adhesively bond plasticizer-containing substrates, characterized in that the moisture curable hot-melt adhesive composition comprises
- at least one moisture-curable polyurethane polymer **P** obtainable by the reaction of
   i. at least one isocyanate-functional species **A;** with
   ii. at least one polyester polyol **B;**
- optionally at least one poly(meth)acrylate.

wherein the at least one polyester polyol **B** is a compound of formula (I) 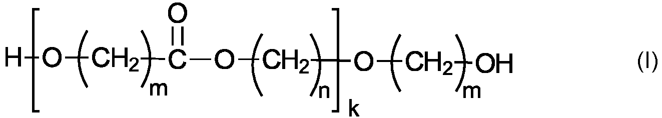
wherein
m has a value of less than 8;
n has a value of less than 8;
k has a value from 5 to 60.

It was found that employing a polyester polyol **B** of formula (I) results in a significant reduction of plasticizer migration when the adhesive composition is used to bond plasticizer-containing substrates.

Substance names beginning with "poly", such as polyol or polyisocyanate, refer to substances containing, in a formal sense, two or more of the functional groups that occur in their name per molecule.

The term "polymer" in the present document includes, on one hand, a collection of macromolecules that are uniform chemically but differ with respect to the degree of polymerization, the molecular weight and the chain length and were synthesized by a polyreaction (polymerization, polyaddition, polycondensation). On the other hand, this term also includes derivatives of such a group of macromolecules of polyreactions, i.e., compounds obtained by reactions, such as additions or substitutions of functional groups on given macromolecules and they may be chemically uniform or chemically heterogeneous. This term also includes so-called prepolymers, i.e., reactive oligomeric preadducts, whose functional groups are involved in the synthesis of macromolecules.

A "polyurethane" refers to a polymer composed of organic units joined by urethane (carbamate) links. The term "polyurethane polymer" includes all polymers synthesized by the so-called diisocyanate polyaddition process. This also includes polymers which are almost or entirely free of urethane groups. Examples of polyurethane polymers include polyether polyurethanes, polyester polyurethanes, polyether polyureas, polyureas, polyester polyureas, polyisocyanurates and polycarbodiimides.

The term "polyisocyanate" designates compounds with two or more isocyanate groups.

An "aromatic" isocyanate group refers to an isocyanate bonded directly to an aromatic carbon atom. Isocyanates having exclusively aromatic isocyanate groups are correspondingly referred to as "aromatic isocyanates".

An "aliphatic" isocyanate group refers to one bonded directly to an aliphatic or cycloaliphatic carbon atom. Isocyanates having exclusively aliphatic isocyanate groups are correspondingly referred to as "aliphatic isocyanates".

The term "NCO" refers to the isocyanate functional group. "NCO content" refers to the content of isocyanate groups in % by weight.

The term "polyol" designates compounds with two or more alcohol groups.

The term "OH" refers to the alcohol (hydroxyl) functional group. "OH content" refers to the content of alcohol groups in % by weight. The term "OH" functionality value refers to the average number of hydroxyl groups per molecule in a compound. The "hydroxyl value" or "OH value" is a measure used to quantify the total number of hydroxyl groups per unit mass of a sample.

"Molecular weight" is understood in the present document to mean the molar mass (in grams per mole) of a molecule or a molecule residue.

"Average molecular weight" is understood herein to mean the number-average Mₙ of an oligomeric or polymeric mixture of molecules or radicals, which is typically determined by means of gel permeation chromatography (GPC) against polystyrene as standard especially with tetrahydrofuran as mobile phase, refractive index detector and evaluation from 200 g/mol.

The term "molar ratio" in connection with reactive groups relates to the ratio of the number of molar equivalents of the corresponding reactive groups.

The term "(meth)acrylate" designates in the context of the present invention methacrylate or acrylate. The term "poly(meth)acrylate" refers to homopolymers, copolymers, and higher interpolymers of an (meth)acrylate monomer with one or more further (meth)acrylate monomers and/or with one or more further monomers.

The term "monomer" designates a molecule having at least one polymerizable group. A monomeric di- or polyisocyanate contains particularly no urethane groups. In the context of the present invention, oligomers, or polymer products of diisocyanate monomers such as adducts of monomeric diisocyanates are not monomeric diisocyanates.

The term "one-component composition" refers in context of the present invention to a composition in which all constituents of the composition are stored in a mixture in the same container or compartment.

"Room temperature" refers here to a temperature of 23°C.

### Moisture-curable polyurethane polymer P

The moisture-curable polyurethane polymer **P** refers to a polyurethane which has functional groups that can react with atmospheric moisture, in particular isocyanate groups and that is obtained by the reaction of at least one isocyanate-functional species **A** with at least one polyester polyol **B.**

The polyurethane polymer **P** can also be obtained by the reaction of at least one isocyanate-functional species **A** with at least one polyester polyol **B and** another polyol **O.**

Preferably, the moisture-curable hot-melt adhesive composition comprises 60 to 100 wt.-% of at least one moisture-curable polyurethane polymer **P,** based on the total weight of the composition.

### Isocyanate-functional species A

The isocyanate-functional species **A** has at least one isocyanate functional group, preferably two or more isocyanate functional groups.

Suitable as isocyanate-functional species **A** are polyisocyanates **I.** The isocyanate-functional species **A** can also be a polyurethane prepolymer **PREP,** obtainable by the reaction of at least one polyol **O** with at least one polyisocyanate **I.**

The isocyanate-functional species **A** can also comprise a mixture of polyisocyanates **I** and polyurethane prepolymer **PREP.**

### Polyester polyol B

The polyester polyol **B** is a compound of formula (I) 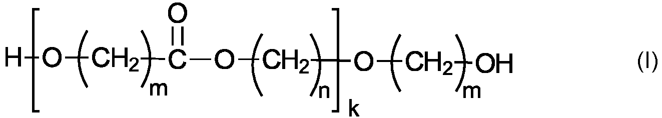 wherein
m has a value of less than 8;
n has a value of less than 8;
k has a value from 5 to 60.

Suitable compounds for use as the at least one polyester polyol **B** of formula (I) include crystalline, partially crystalline, and amorphous, polyester polyols. These can be obtained by reacting diols, for example, 1,2-ethanediol, 1,2-propanediol, 1,3-propanediol, 1,4-butanediol, 1,5-pentanediol, 1,6-hexanediol, or mixtures of the aforesaid alcohols, with organic dicarboxylic acids or their anhydrides or esters, such as succinic acid, adipic acid, suberic acid, sebacic acid, azelaic acid, or mixtures of the aforesaid acids.

Preferred as polyester polyols **B** of formula (I) are compounds obtained by reacting 1,2 propanediol, 1,4-butanediol and/or 1,6-hexanediol as diol and succinic acid, adipic acid and/or sebacic acid as carboxylic acid.

In a preferred embodiment, the polyester polyol **B** of formula (I) is characterized in that the sum of m and n has a value of less than 12, preferably less than 10.

In another preferred embodiment, the polyester polyol **B** has a weight average molecular weight (Mₙ) determined by gel permeation chromatography (GPC) using polystyrene as standard of 1'000 - 7'500 g/mol, preferably 1'500 - 5'000 g/mol.

In another preferred embodiment, the polyester polyol **B** is a solid at room temperature.

### Polyurethane prepolymer PREP

In another preferred embodiment isocyanate-functional species **A** is a polyurethane prepolymer **PREP** obtainable by the reaction of at least one polyol **O** with at least one polyisocyanate **I.**

In another preferred embodiment, the polyurethane **PREP** can be a composition additionally comprising at least one poly(meth)acrylate.

### Polyol O

Suitable as polyol **O** are polyester polyols, polyether polyols, polycarbonate and acrylic polyols or a mixture of the aforesaid polyols.

Suitable as polyol **O** are polyester polyols of the same nature as polyester polyol **B** described above. However, for the polyol **O,** all kinds of polyester polyol are suitable and are thus not restricted to formula (I).

Suitable compounds as polyester polyol for polyol **O** include crystalline, partially crystalline, and amorphous, polyester polyols. These can be obtained by reacting dihydric and trihydric, preferably dihydric, alcohols, for example, 1,2-ethanediol, diethylene glycol, triethylene glycol, 1,2-propanediol, 1,3-propanediol, dipropylene glycol, 1,4-butanediol, 1,5-pentanediol, 1,6-hexanediol, 1,8-octanediol, 1,10-decanediol, 1,12-dodecanediol, dimer fatty alcohol, neopentyl glycol, glycerol, 1,1,1-trimethylolpropane or mixtures of the aforesaid alcohols, with organic dicarboxylic acids or tricarboxylic acids, preferably dicarboxylic acids, or their anhydrides or esters, such as succinic acid, glutaric acid, 3,3-dimethylglutaric acid, adipic acid, suberic acid, sebacic acid, undecanedioic acid, dodecanedicarboxylic acid, azelaic acid, maleic acid, fumaric acid, phthalic acid, dimer fatty acid, isophthalic acid, terephthalic acid, and hexahydrophthalic acid, or mixtures of the aforesaid acids. Polyester polyols made from lactones such as from ε-caprolactone, also known as polycaprolactones, are also suitable.

Preferably, the polyol **O** is a polyether polyol.

Suitable as polyether polyols, also known as polyoxyalkylene polyols, are polymerization products of ethylene oxide, 1,2-propylene oxide, 1,2- or 2,3-butylene oxide, tetrahydrofuran or mixtures thereof, optionally polymerized by means of a starter molecule having two or more active hydrogen atoms, such as, for example, water, ammonia or compounds having two or more OH- or NH- groups such as 1,2-ethanediol, 1,2- and 1,3-propanediol, neopentyl glycol, diethylene glycol, triethylene glycol, isomeric dipropylene glycols and tripropylene glycols, isomeric butanediols, pentanediols, hexanediols, heptanediols, octanediols, nonanediols, decanediols, undecanediols, 1,3- and 1,4-cyclohexanedimethanol, bisphenol A, hydrogenated bisphenol A, 1,1,1-trimethylolethane, 1,1,1-trimethylolpropane, glycerol, aniline, and mixtures of the aforesaid compounds. Use can be made both of polyoxyalkylene polyols which have a low degree of unsaturation (measured according to ASTM D-2849-69 and expressed as milliequivalents of unsaturation per gram of polyol (meq/g)), produced for example by means of double metal cyanide complex catalysts (DMC catalysts), and of polyoxyalkylene polyols having a relatively high degree of unsaturation, produced for example by means of anionic catalysts such as NaOH, KOH or alkali metal alkoxides.

Preferably, the polyether polyol has an average OH functionality in the range from 1.5 to 3.

Preferably, the polyether polyol has a OH value of 5 to 250 mg KOH/g, preferably 10 to 200 mg KOH/g, most preferably 15 to 150 mg KOH/g.

In preferred embodiments, the polyether polyol has an average molecular weight Mₙ of more than 500 g/mol, preferably between 1'000 and 20'000 g/mol, most preferably between 1'500 bis 15'000 g/mol.

Repeat units present in the polyether polyol are preferably 1,2-ethyleneoxy, 1,2-propyleneoxy, 1,3-propyleneoxy, 1,2-butyleneoxy or 1,4-butyleneoxy groups. Preference is given to 1,2-ethyleneoxy (EO) and/or 1,2-propyleneoxy (PO) groups. More preferably, repeat units present in the polyether polyol are mainly or exclusively 1,2-propyleneoxy groups.

In a preferred embodiment, the polyether polyol contains between 80 to 100 wt.-% of 1,2-propyleneoxy (PO) groups and between 0 and 20 wt.-% of other repeat units such as 1,2-ethyleneoxy (EO) groups and/or propyleneoxy-ethylenoxy (PO-EO) groups.

Preferably, the polyether polyols are commercially available.

In a preferred embodiment, the polyol **O** is a polyether polyol, preferably a polyether polyol based on 1,2-ethyleneoxy, 1,2-propyleneoxy, 1,3-propyleneoxy, 1,2-butyleneoxy or 1,4-butyleneoxy groups, preferably 1,2-ethyleneoxy and/or 1,2-propyleneoxy groups, most preferably 1,2-propyleneoxy groups.

### Polyisocyanate I

Suitable as polyisocyanates **I** are, for example, aliphatic, cyclo-aliphatic, and aromatic polyisocyanates, especially diisocyanates, particularly monomeric diisocyanates. Non-monomeric diisocyanates such as oligomeric and polymeric products of monomeric diisocyanates, for example adducts of monomeric diisocyanates are also suitable but the use of monomeric diisocyanates is preferred.

Suitable polyisocyanates **I** are for example 2,4- and 2,6-toluylendiisocyanate (TDI) and any desired mixtures of these isomers, 4,4'-, 2,4'- and 2,2'-diphenylmethandiisocyanate and any desired mixtures of these isomers (MDI), mixtures made up of MDI and MDI homologues (polymeric MDI or PMDI), 1,3- and 1,4-phenylendiisocyanate, naphthaline-1,5-diisocyanate (NDI), 3,3'-dimethyl-4,4'-diisocyanatodiphenyl (TODI), 1,6-hexamethylendiisocyanate (HDI), 2-methylpentamethylene-1,5-diisocyanate, 2,2,4- and 2,4,4-trimethyl-1,6-hexamethylendiisocyanate (TMDI), 1,12-dodecamethylendiisocyanate, cyclohexane-1,3- and cyclohexane-1,4-diisocyanate and any desired mixtures of these isomers, 1-isocyanato-3,3,5-trimethyl-5-isocyanatomethyl-cyclohexane (= isophorone diisocyanate or IPDI), perhydro-2,4'- and -4,4'-diphenylmethane diisocyanate (HMDI), 1,4-diisocyanato-2,2,6-trimethylcyclohexane (TMCDI), m- and pxylylendiisocyanate (m- and p-XDI), m-tetramethyl-1,3- and m-tetramethyl-1,4-xylylene diisocyanate and p- tetramethyl-1,3- and m-tetramethyl-1,4-xylylene diisocyanate (m- and p-TMXDI).

Further exemplary polyisocyanates are the isocyanurates and biurets of the immediately aforementioned polyisocyanates.

Preferred as polyisocyanate **I** are aromatic isocyanates. Particularly preferred are 2,4- and 2,6-toluylendiisocyanate (TDI) and/or 4,4'-, 2,4'- and 2,2'-diphenylmethandiisocyanate (MDI) and/or mixtures made up of MDI and MDI homologues (polymeric MDI or PMDI).

In a preferred embodiment, the polyisocyanate **I** is an aromatic isocyanate, preferably 2,4- and 2,6-toluylendiisocyanate (TDI) and/or 4,4'-, 2,4'- and 2,2'-diphenylmethandiisocyanate (MDI).

### Poly(meth)acrylate

Suitable (meth)acrylate monomers for the synthesis of poly(meth)acrylate do preferably not contain further functional groups such as hydroxyl- and/or carboxyl groups. However, (meth)acrylate monomers containing further functional groups, particularly hydroxyl-groups, can be used in combination with (meth)acrylate monomers without further functional groups.

Suitable (meth)acrylate monomers include, for example, alkyl(meth)acrylates, such as methyl acrylate, methyl methacrylate, ethyl acrylate, n-butyl acrylate, n-butyl methacrylate, n-pentyl acrylate, n-hexyl acrylate, n-heptyl acrylate, n-octyl acrylate, n-octyl methacrylate, n-nonyl acrylate, lauryl acrylate, stearyl acrylate, behenyl acrylate, and their branched isomers, as for example isobutyl acrylate, 2-ethylhexyl acrylate, 2-ethylhexyl methacrylate, isooctyl acrylate, isooctyl methacrylate, and also cyclohexyl methacrylate, isobornyl acrylate, isobornyl methacrylate or 3,5-dimethyladamantyl acrylate.

Suitable (meth)acrylate monomers with further functional groups include, for example, hydroxyl group containing (meth)acrylate monomers, such as 2-hydroxyethyl(meth)acrylate, 2-hydroxypropyl(meth)acrylate, 3-hydroxypropyl (meth)acrylate, 2-hydroxybutyl(meth)acrylate, 4-hydroxybutyl butyl(meth)acrylate, 2-hydroxy-hexyl(meth)acrylate, 6-hydroxy hexyl(meth) acrylate, 8-hydroxyoctyl(meth)acrylate, 10-hydroxydecyl (meth)acrylate, 12-hydroxylauryl(meth)acrylate.

Further suitable comonomers for the synthesis of the poly(meth)acrylate include vinyl compounds, such as ethylenically unsaturated hydrocarbons with functional groups, vinyl esters, vinyl halides, vinylidene halides, nitriles of ethylenically unsaturated hydrocarbons, phosphoric acid esters, and zinc salts of (meth)acrylic acid. Examples of further suitable comonomers include, for example, maleic anhydride, styrene, styrenic compounds, acrylonitriles, vinyl acetate, vinyl propionate, vinyl chloride, (meth)acrylic acid, beta-acryloyloxypropionic acid, vinylacetic acid, fumaric acid, crotonic acid, aconitic acid, trichloroacrylic acid, itaconic acid, and maleic acid, and amides thereof.

Especially suitable poly(meth)acrylates include, for example, homopolymers and copolymers obtained by free radical polymerization of one or more (meth)acrylate monomers optionally in combination with one or more hydroxyl-functional (meth)acrylate monomer and/or at least one further comonomer.

Suitable poly(meth)acrylates are commercially available, for example, under the trade name of Dynacoll^{®} AC, such as Dynacoll^{®} AC 1420, Dynacoll^{®} AC 1520, Dynacoll^{®} AC 1631, Dynacoll^{®} AC 1620, Dynacoll^{®} AC 1630, Dynacoll^{®} AC 1632, Dynacoll^{®} AC 1750, Dynacoll^{®} AC 1920, Dynacoll^{®} AC 4830, and Dynacoll^{®} AC 2740 (all from Evonik Industries).

In a preferred embodiment the moisture-curable hot-melt adhesive composition additionally comprises 5 to 65 wt.-%, preferably 15 to 55 wt.-%, based on the total weight of the composition, of at least one poly(meth)acrylate.

### Catalyst

The moisture curable hot-melt adhesive may additionally comprise at least one catalyst that catalyzes the reactions of isocyanate groups with water.

Examples of suitable catalysts include metal-based catalysts such as dialkyltin complexes, particularly dibutyltin(IV) or dioctyltin(IV) carboxylates or acetoacetonates, such as dibutyltindilaurate (DBTDL), dibutyltindiacetylacetonate, dioctyltindilaurate (DOTDL), further bismuth(III) complexes such as bismuthoctoate or bismuthneodecanoate, zinc(II) complexes, such as zincoctoate or zincneodecanoate, and zirconium(IV) complexes, such as zirconiumoctoate or zirconiumneodecanoate.

Further examples of suitable catalysts include compounds containing amine groups such as, dimorpholinodialkylethers and/or dimorpholino substituted polyalkylene glycols, for example 2,2'-dimorpholinodiethyl ether and 1,4-diazabicyclo[2.2.2]-octane. Combinations of two or more catalysts may also be used, preferred combinations including of one or more metal-catalysts with one or more morpholine amine compounds.

### Plasticizer-containing substrate

Common plasticizers in plasticizer-containing substrates are, in particular phthalates, in particular diisononyl phthalate (DINP), diisodecyl phthalate (DIDP) or di(2-propylheptyl) phthalate (DPHP), hydrogenated phthalates, in particular diisononyl 1,2-cyclohexanedicarboxylate (DINCH), terephthalates, in particular bis(2-ethylhexyl)terephthalate or diisononyl terephthalate (DINT), hydrogenated terephthalates, in particular bis(2-ethylhexyl)-1,4-cyclohexanedicarboxylate or diisononyl-1,4-cyclohexanedicarboxylate, isophthalates, trimellitates, adipates, in particular dioctyl adipate (DOA), azelates, sebacates, citrates, benzoates, glycol ethers, glycol esters, plasticizers with a polyether structure, in particular poly(oxy-1,2-propylene)-monols, -diols or -triols, optionally with blocked hydroxyl groups, in particular in the form of acetyl groups, as well as organic sulphonates or phosphates, in particular diphenyl cresyl phosphate (DPK) or tris-2-ethyl-hexylphosphate (TOF), polybutenes, polyisobutenes or derived from natural fats or oils, in particular epoxidized soybean or linseed oil or soybean or linseed oil or rapeseed oil methyl ester, whereby phthalates, hydrogenated phthalates, adipates or plasticizers with a polyether structure are preferred.

In a preferred embodiment, the plasticizer-containing substrate comprises at least 20 wt.-%, preferably at least 30 wt.-%, most preferably at least 40 wt.-%, based on the weight of the substrate, of at least one plasticizer.

In a preferred embodiment, the at least one plasticizer in the plasticizer-containing substrate is diisononyl phthalate (DINP), diisodecyl phthalate (DIDP), di(2-propylheptyl) phthalate (DPHP), diisononyl 1,2-cyclohexanedicarboxylate (DINCH) diisononyl terephthalate (DINT) and/or particular dioctyl adipate (DOA).

Common substrates in plasticizer-containing substrates are polymeric foils. Polymeric foil is a thin, flexible film made from polymer materials. The thickness of polymeric foils usually ranges from 10 micrometers to 250 micrometers, although thinner or thicker variants are available.

Polymeric foils usually contain at least 20 wt.-%, preferably at least 30 wt.-%, most preferably at least 40 wt.-%, of plasticizer, based on the weight of the substrate.

Polymeric foils are typically produced by extruding or casting polymers such as polyethylene (PE), polyethylene terephthalate (PET), polyvinyl chloride (PVC), polypropylene (PP) and polyurethane (PU).

Particularly preferred as plasticizer-containing substrate is polyvinyl chloride foil.

A particularly preferred substrate as plasticizer-containing substrate is artificial leather. Artificial leather usually consists of a textile base fabric covered by at least one, preferably two or more layers of polymeric foil.

Suitable plasticizer-containing substrates are used as automotive interior material, such as ceiling skin material, door trim material, instrument board material or automobile chair skin material.

In a preferred embodiment, the plasticizer-containing substrate is a polymeric foil, preferably a polyvinyl chloride foil.

In a preferred embodiment, the plasticizer-containing substrate is artificial leather.

In a preferred embodiment, the moisture-curable polyurethane polymer **P** is obtained in a two-step process. The advantage of a two-step process is a lower monomeric diisocyanate content, typically below 1.5 wt.-%, preferably below 1.0 wt.-%, based on the total weight of the composition. Distillation is typically not required to reach this value.

In a preferred embodiment, the moisture curable hot-melt adhesive composition has a content of monomeric diisocyanates of not more than 1.5 wt.-%, preferably not more than 1.0 wt.-%, based on the total weight of the composition.

### Additives

The moisture-curable hot-melt adhesive composition can further comprise additives, for example those selected from the group consisting of fillers, plasticizers, adhesion promoters, UV absorption agents, UV and heat stabilizers, flame retardants, optical brighteners, pigments, dyes, and desiccants.

Examples of suitable UV stabilizers that can be added to the adhesive composition include, for example, sterically hindered phenols, and suitable UV-absorbers include, for example, hydroxybenzophenones, hydroxybenzotriazoles, triazines, anilides, benzoates, cyanoacrylates, phenylformamidines, and mixtures thereof.

Suitable fillers include inorganic and organic fillers, especially natural, ground or precipitated calcium carbonates, optionally coated with fatty acids or fatty acid esters, especially stearic acid, baryte (heavy spar), talcs, quartz flours, quartz sand, dolomites, wollastonites, kaolins, calcined kaolins, mica (potassium aluminum silicate), molecular sieves, aluminum oxides, aluminum hydroxides, magnesium hydroxide, silicas including finely divided silicas from pyrolysis processes, industrially produced carbon blacks, graphite, metal powders such as aluminum, copper, iron, silver, steel, polyvinylchloride powder, and hollow spheres.

The total amount of such auxiliary substances and additives preferably makes up not more than 15 wt.-%, more preferably not more than 10 wt.-%, of the total weight of the adhesive composition.

In a preferred embodiment the moisture-curable hot-melt adhesive composition comprises
- 60 to 100 wt.-% of at least one moisture-curable polyurethane polymer **P**;
- 5 to 65 wt.-%, preferably 15 to 55 wt.-% of the at least one poly(meth)acrylate;
- 0 to 15 wt.-%, preferably 0 to 10 wt.-% of additives,
based on the total weight of the adhesive composition.

Another aspect of the invention is the use of the moisture-curable hot-melt adhesive as an automotive assembly adhesive and/or laminating adhesive.

Yet another aspect of the invention is a method for adhesively bonding a first substrate to a second substrate, the method comprising steps of:
I) Heating the moisture-curable hot-melt adhesive composition to provide a melted adhesive composition;
II) Applying the melted adhesive composition to a surface of the first substrate;
III) Contacting the applied adhesive with a surface of the second substrate;
   and
IV) Chemically curing the applied adhesive with water, preferably with atmospheric moisture.
wherein at least one of the substrates is a plasticizer-containing substrate, preferably polyvinyl chloride, in particular polyvinyl chloride-foil.

The first and second substrates can be sheet-like articles having first and second major surfaces defined by peripheral edges and defining a thickness there between or three-dimensional shaped articles.

In the method for adhesively bonding a first substrate to a second substrate, the adhesive composition is heated to a temperature above the softening point of the adhesive composition and applied to the surface of the first substrate in molten state using any conventional technique, for example, by using slot die coating, roller coating, extrusion coating, calendar coating, or spray coating. The adhesive composition can be applied to the surface of the first substrate with a coating weight of, for example, 25 - 750 g/m², preferably 35 - 500 g/m², more preferably 45 - 350 g/m², even more preferably 50 - 250 g/m².

A still further aspect of the present invention is an article obtained by the described method for adhesively bonding a first substrate to a second substrate

### Examples

Adduced hereinafter are working examples of inventive and comparative compositions which are intended to elucidate the invention described in detail. It will be appreciated that the invention is not restricted to these described working examples.

### Preparation of Prepolymer PREP

23.82 g of polymer beads based on methyl methacrylate and n-butyl methacrylate (Dynacoll AC 1630, Evonik, average MW = 55'000 g/mol) and 23.82 g of polymer beads based on methyl methacrylate and n-butyl methacrylate (Dynacoll AC 2740, Evonik, average MW = 80'000 g/mol) were dissolved in 59.94 g of polyoxypropylene diol (Desmophen 3600 Z MX, Covestro, OH number = 56 mg KOH/g, average MW = 2'000 g/mol) at 160°C for 2 hours. Then, 17.1 g of monomeric diphenylmethane-4,4'-diisocyanate (Desmodur 44 MC, Covestro) was added and reacted by a known method at 140°C to give an NCO-terminated polyurethane polymer.

### Preparation of Compositions

The synthesized isocyanate group-containing prepolymer **PREP** was added and mixed with the polyester polyols **B 1** and **B 2** from table 1 according to table 2 at 140°C to afford the moisture-curable hot-melt adhesive compositions.

### Test Methods

To determine the **plasticizer migration,** the moisture-curable hot-melt adhesive composition was applied as an adhesive film on a polyethylene (PE) foil (60x60x0.5 mm), cured and stored at room temperature for 7 days. The film was then weighed (G₀-value). The film was then placed in a Petri dish and submerged with diisononyl phthalate (DINP) plasticizer for 22 hours at 50°C. Subsequently, Petri dish was cooled to room temperature for 2 hours. Then, the film was removed from the Petri dish and rinsed with gasoline 60/95 and left to dry at room temperature for 2 hours. The film was then weighed again (G₁-value). The **plasticizer migration** was then evaluated as the percentage of plasticizer uptake by the formula (1): $\frac{{G}_{0} - {G}_{1}}{{G}_{1}}$

The results are summarized in table 3.

### Chemicals for Compositions

**Table 1: Compounds used for the preparation of the reactive hot-melt compositions.**

| **Name** | **Description** |
|---|---|
| Prepolymer **PREP** | Isocyanate-group containing prepolymer |
| Polyester Polyol **B 1-1** | 1,2-propanediol and succinic acid |
| | OH-number: 56 mg/g KOH |
| | Average MW: 2'000 |
| Polyester Polyol **B 1-2** | 1,4-butanediol and succinic acid |
| | OH-number: 30 mg/g KOH |
| | Average MW: 4'000 |
| Polyester Polyol **B 1-3** | 1,4-butanediol and adipic acid |
| | OH-number: 32 mg/g KOH |
| Polyester Polyol **B 1-4** | 1,6-hexanediol and succinic acid |
| | OH-number: 34 mg/g KOH |
| Polyester Polyol **B 1-5** | 1,6-hexanediol and adipic acid |
| | OH-number: 55 mg/g KOH |
| Polyester Polyol **B 1-6** | 1,4-butanediol and sebacic acid |
| | OH-number: 31 mg/g KOH |
| | Average MW: 3'500. |
| Polyester Polyol **B 1-7** | 1,6-hexanediol and sebacic acid |
| | OH-number: 30 mg/g KOH |
| Polyester Polyol **B 2** | 1,6-hexanediol and dodecandioic acid |
| | OH number: 30 mg KOH/g |
| | Average MW: 3'500 |

### Compositions

Inventive examples are **E1** to **E5.**

Comparative examples are identified in Tables 2 to 3 by "(Ref.)".

**Table 2: Compositions used in material tests. Values are in wt.-% totaling 100%.**

| **Example Compositions** | **E1** | **E2** | **E3** | **E4** | **E5** | **E6** (Ref.) | **E7** (Ref.) |
|---|---|---|---|---|---|---|---|
| **PREP** | 80 | 80 | 80 | 80 | 80 | 80 | 80 |
| **B 1-1** | 10 | - | - | - | - | - | - |
| **B 1-2** | - | 10 | - | - | - | - | - |
| **B 1-3** | - | - | 10 | - | - | - | - |
| **B 1-4** | - | - | - | 10 | - | - | - |
| **B 1-5** | - | - | - | - | 10 | - | - |
| **B 1-6** | - | - | - | - | - | 10 | - |
| **B 1-7** | - | - | - | - | - | - | 10 |
| **B 2** | 10 | 10 | 10 | 10 | 10 | 10 | 10 |

### Material Tests

Table 3 shows that a significantly lower plasticizer migration can be achieved by employing polyester polyol **B** according to formula (I) in the synthesis of the moisture-curable polyurethane polymer **P** compared to adhesive compositions without polyester polyol **B.** Inventive example compositions **E1** to **E5** show plasticizer migration well below 50 %, with 21.11 % being the lowest value and 36.54 % being the highest value.

Thus, the inventive compositions exhibit improved stability against plasticizer migration when compared to state-of-the-art reference examples.

The reference examples **E6** (Ref.) and **E7** (Ref) do not employ polyester polyol **B** in the synthesis of the moisture-curable polyurethane polymer **P.**

Table 1 also shows the values for m, n and m+n of **B 1.**

**Table 3: Material tests evaluating plasticizer migration.**

| **Test results** | **E1** | **E2** | **E3** | **E4** | **E5** | **E6** (Ref.) | **E7** (Ref.) |
|---|---|---|---|---|---|---|---|
| **B 1** (m) | 3 | 4 | 4 | 6 | 6 | 4 | 6 |
| **B 1** (n) | 2 | 2 | 4 | 2 | 4 | 8 | 8 |
| **B 1** (m+n) | 5 | 6 | 8 | 8 | 10 | 12 | 14 |
| Plasticizer Migration (%) | 25.82 | 21.11 | 26.87 | 30.02 | 36.54 | 57.53 | 63.12 |

## Claims

1. Use of a moisture-curable hot-melt adhesive composition to adhesively bond plasticizer-containing substrates, **characterized in that** the moisture-curable hot-melt adhesive composition comprises
- at least one moisture-curable polyurethane polymer **P** obtainable by the reaction of
i. at least one isocyanate-functional species **A;** with
ii. at least one polyester polyol **B;**
- optionally at least one poly(meth)acrylate.
wherein the at least one polyester polyol **B** is a compound of formula (I) 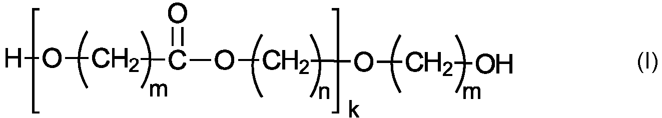
wherein
m has a value of less than 8;
n has a value of less than 8;
k has a value from 5 to 60.

2. Use according to claim 1, wherein the polyester polyol **B** of formula (I) is **characterized in that** the sum of m and n has a value of less than 12, preferably less than 10.

3. Use according to any of claims 1 to 2, wherein the at least one polyester polyol **B** has a weight average molecular weight (Mₙ) determined by gel permeation chromatography (GPC) using polystyrene as standard of 1'000 - 7'500 g/mol, preferably 1'500 - 5'000 g/mol.

4. Use according to any of claims 1 to 3, wherein the polyester polyol **B** is a solid at room temperature.

5. Use according to any of claims 1 to 4, wherein the isocyanate-functional species **A** is a polyurethane prepolymer **PREP** obtainable by the reaction of at least one polyol **O** with at least one polyisocyanate **I.**

6. Use according to any of claims 1 to 5, wherein the polyol **O** is a polyether polyol, preferably a polyether polyol based on 1,2-ethyleneoxy, 1,2-propyleneoxy, 1,3-propyleneoxy, 1,2-butyleneoxy or 1,4-butyleneoxy groups, preferably 1,2-ethyleneoxy and/or 1,2-propyleneoxy groups, most preferably 1,2-propyleneoxy groups.

7. Use according to any of claims 5 to 6, wherein the polyisocyanate **I** is an aromatic isocyanate, preferably 2,4- and 2,6-toluylendiisocyanate (TDI) and/or 4,4'-, 2,4'- and 2,2'-diphenylmethandiisocyanate (MDI).

8. Use according to any of claims 1 to 7, wherein the moisture-curable hot-melt adhesive composition additionally comprises 5 to 65 wt.-%, preferably 15 to 55 wt.-%, based on the total weight of the composition, of at least one poly(meth)acrylate.

9. Use according to any of claims 1 to 8, wherein plasticizer-containing substrate comprises at least 20 wt.-%, preferably at least 30 wt.-%, most preferably at least 40 wt.-%, based on the weight of the substrate, of at least one plasticizer.

10. Use according to claim 8, wherein the at least one plasticizer in the plasticizer-containing substrate is diisononyl phthalate (DINP), diisodecyl phthalate (DIDP), di(2-propylheptyl) phthalate (DPHP), diisononyl 1,2-cyclohexanedicarboxylate (DINCH) diisononyl terephthalate (DINT) and/or particular dioctyl adipate (DOA).

11. Use according to any of claims 1 to 10, wherein the plasticizer-containing substrate is a polymeric foil, preferably polyvinyl chloride foil.

12. Use according to any of claims 1 to 11, wherein the plasticizer-containing substrate is artificial leather.

13. Use according to any of claims 1 to 12, wherein the moisture curable hot-melt adhesive composition has a content of monomeric diisocyanates of not more than 1.5 wt.-%, preferably not more than 1.0 wt.-%, based on the total weight of the composition.

14. Use according to any of claims 1 to 13, wherein the moisture-curable hot-melt adhesive composition comprises
- 60 to 100 wt.-% of the least one moisture-curable polyurethane polymer **P;**
- 5 to 65 wt.-%, preferably 15 to 55 wt.-% of the at least one poly(meth)acrylate;
- 0 to 15 wt.-%, preferably 0 to 10 wt.-% of additives,
based on the total weight of the adhesive composition.

15. Use according to any claims 1 to 14 as automotive assembly adhesive and/or laminating adhesive.

16. A method for adhesively bonding a first substrate to a second substrate, the method comprising steps of:
I) Heating an adhesive composition as defined in any one of claims 1 to 14 to provide a melted adhesive composition;
II) Applying the melted adhesive composition to a surface of the first substrate;
III) Contacting the applied adhesive with a surface of the second substrate;
and
IV) Chemically curing the applied adhesive with water, preferably with atmospheric moisture.
wherein at least one of the substrates is a plasticizer-containing substrate, preferably polyvinyl chloride, in particular polyvinyl chloride-foil.

17. An article obtained by the method according to any of claim 16.
